# EUROPEAN PATENT SPECIFICATION

(11) **EP 2 062 759 B1**
(45) Date of publication and mention of the grant of the patent: **26.05.2010**
(21) Application number: 08380321.3
(22) Date of filing: 19.11.2008
(51) Int. Cl.: B60H 1/00

(54) **Conditioning air feeder for glove compartments of automobiles**
Zuleitung von klimatisierter Luft für Handschuhfächer von Automobilen
Alimentation d'air de climatisation pour boîtes à gants d'automobiles

(30) Priority: 20.11.2007 ES 200702384 U
(43) Date of publication of application: 27.05.2009
(73) Proprietor: Seat, S.A., 08760 Martorell, Barcelona (ES)
(72) Inventor: Perez Perez, Fernando c/o SEAT S.A., 08760 Martorell (Barcelona) (ES); Demers, Marc c/o SEAT S.A., 08760 Martorell (Barcelona) (ES); Villar Mesa, Eva c/o SEAT S.A., 08760 Martorell (Barcelona) (ES)
(74) Representative: Carvajal y Urquijo, Isabel

(56) References cited:
- EP-A- 1 645 447
- GB-A- 2 346 961
- US-A- 3 757 851

## Description

### Field of the Invention

The present invention relates to a conditioning air feeder for glove compartments of automobiles, especially designed to cool the glove compartment and articles contained therein, from the air conditioning equipment of the automobile.

### Background of the Invention

Glove compartments cooled from the air conditioning equipment of the automobile are already known.

In some cases the cooling of the glove compartment is achieved by passing the air conditioning circuit of the automobile behind the glove compartment, close thereto. With this system only a slight cooling of the interior of the glove compartment is achieved.

To achieve a greater cooling effect in the glove compartment it is already known to connect the glove compartment to the air conditioning equipment by means of a conduit, through which part of the air supplied by said equipment to the glove compartment is diverted. Such a solution is shown in US 3 757 851 which is considered to represent the closest prior art. This solution allows achieving greater cooling within the glove compartment, but has problems for assembling and coupling the intercommunication conduit. This conduit is connected at one end to the feeder equipment and at the opposite end to the glove compartment. The connection to the air conditioning equipment is usually carried out by means of a bayonet coupling. The connection to the glove compartment is carried out by means of a coupling part forming a nipple, through which it is connected to the conduit, and a mouth adaptable to an opening of the glove compartment, which opening can have assembled thereto a gate to open and close the passage of air between the mouth of the coupling part and the opening of the wall of the glove compartment.

The mentioned conduit is supported through the coupling part, for which said part usually has tabs with holes through which anchor screws for anchoring to the dashboard of the vehicle pass.

This solution forces carrying out fixing operations by means of screws, which makes the assembly more expensive. In addition, upon carrying out the anchoring to a different component of the glove compartment and of the air conditioning equipment, there is more risk of unwanted clearances occurring due to deviations, vibrations or movements of the mentioned components.

### Description of the Invention

The object of the present invention is to eliminate the problems set forth by means of a conditioning air feeder for the glove compartment of an automobile, which does not require fixing operations for fixing by means of screws and which eliminates or reduces the risk of clearances between the air conditioning equipment and the glove compartment.

The air feeder of the invention is of the type set forth above, made up of a conduit which is connected at one end to the air conditioning equipment, for example by means of a bayonet coupling, and at the other end to the glove compartment, by means of a coupling part forming a nipple for inserting into the conduit and a connection mouth for connecting with the glove compartment.

Based on this makeup, the feeder of the invention is **characterised in that** the coupling part, which is used as a connection means between the conduit and glove compartment, externally has fixing elements for fixing on anchors formed externally in the casing of the air conditioning equipment, coinciding in position and number. The mentioned anchoring and fixing elements have mutual clip-fastening means.

With this makeup the air feeder is supported by the casing of the air conditioning equipment, i.e., by one of the components forming part of the air conditioning installation of the glove compartment, thus eliminating risks of tolerances between the air conditioner and the glove compartment.

In addition, upon fastening the feeder to the casing of the air conditioning equipment by means of clipping, the fixing operation is simplified and the need to use screws or other auxiliary securing elements is eliminated.

The coupling part forming part of the air feeder of the invention is made up of a receptacle from which the nipple for inserting into the conduit of said feeder starts. The open base of the receptacle forms the connection mouth for connecting to the opening of the glove compartment.

The fixing elements for fixing the coupling part to the casing of the air conditioning equipment consist of arms projecting externally from the wall of the receptacle forming said coupling part, which arms are directed towards the casing of the air conditioning equipment and have at their ends a male pin, with a retaining tip, which is introduced and fixed in the anchors of the casing, which anchors are configured like female pins.

The retaining tip of the male pins consists of a transverse broadening, with a semi-arrowhead profile, finishing the male pints on one side. With regard to the anchors of the casing of the air conditioning equipment, they consist of female pins formed externally in said casing, in which the male pins are tightly coupled by sliding and have a recess or transverse window positioned and sized to receive and fasten the retaining tip of these male pins.

With the makeup described, to assemble the air feeder of the invention, it is connected to the casing of the air conditioning equipment by known systems, for example by means of a bayonet coupling and then the coupling part of the feeder is fixed to the actual casing of the air conditioning equipment, introducing the male pins into the female pins by sliding, until reaching the clipping or fixing position, the open base of the receptacle of the coupling part being opposite the opening of the casing of the glove compartment in this situation, with the interposition of a foam ring or the like, whereby the tightness of this connection and at the same time a shock-absorbing effect between the coupling part and the casing of the glove compartment is achieved.

### Brief Description of the Drawings

The attached drawings show a non-limiting embodiment, the description of which will aid to better understand the features and advantages of the feeder of the invention.

In the drawings:
Figure 1 is a perspective view of an air feeder made up according to the invention.
Figure 2 is a rear perspective view of the same feeder.
Figure 3 shows detail A of Figure 2, on a larger scale.
Figure 4 shows detail B of Figure 2, on a larger scale.
Figure 5 is a partial longitudinal section view of the feeder of the invention, taken according to section line V-V of Figure 2.
Figure 6 shows a perspective view of the casing of the air conditioning equipment, with the anchors for fixing the feeder of the invention.
Figure 7 shows detail C of Figure 6, on a larger scale.
Figure 8 shows a perspective view of the air feeder assembled in the casing of the air conditioning equipment of Figure 6.
Figure 9 is a schematic section view of the air feeder assembled on the casing of the air conditioning equipment, taken according to section line IX-IX of Figure 8.
Figure 10 shows a section view, taken according to section line X-X of Figure 8, of the coupling and fastening of the fixing elements of the feeder in the anchors of the casing of the air conditioning equipment.

### Detailed Description of an Embodiment

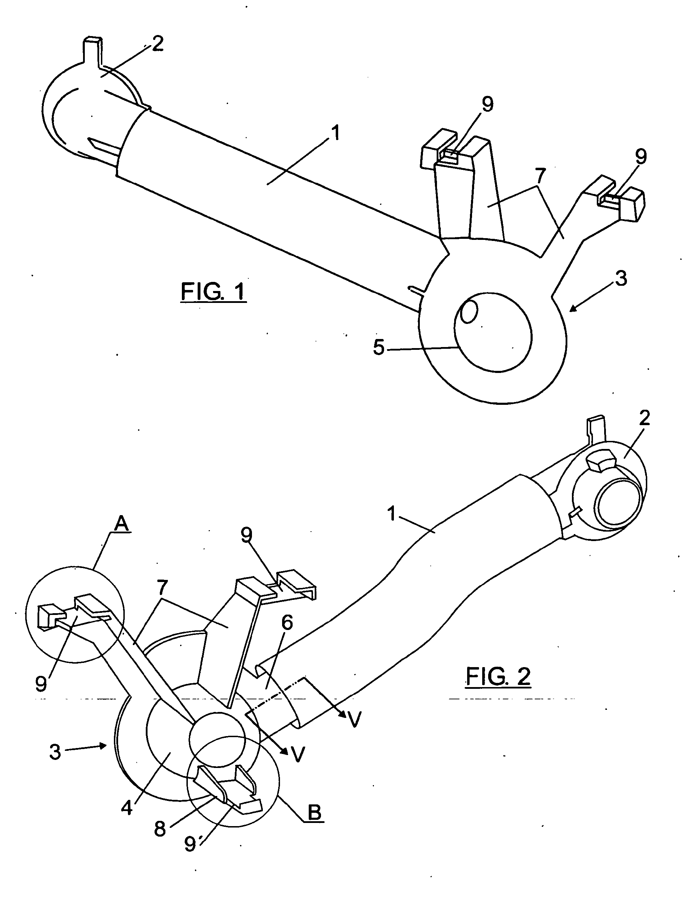

Figures 1 and 2 show front and rear perspective views of a conditioning air feeder for glove compartments of automobiles, made up according to the invention. This feeder is made up of a conduit 1, preferably of a flexible nature, which has fixed at one of its ends a bayonet coupling 2, by means of which the feeder will be connected to a mouth of the casing of the air conditioning equipment, whereas at the opposite end it has fixed thereto a coupling part 3 through which the conduit 1 is connected to the glove compartment of the automobile.

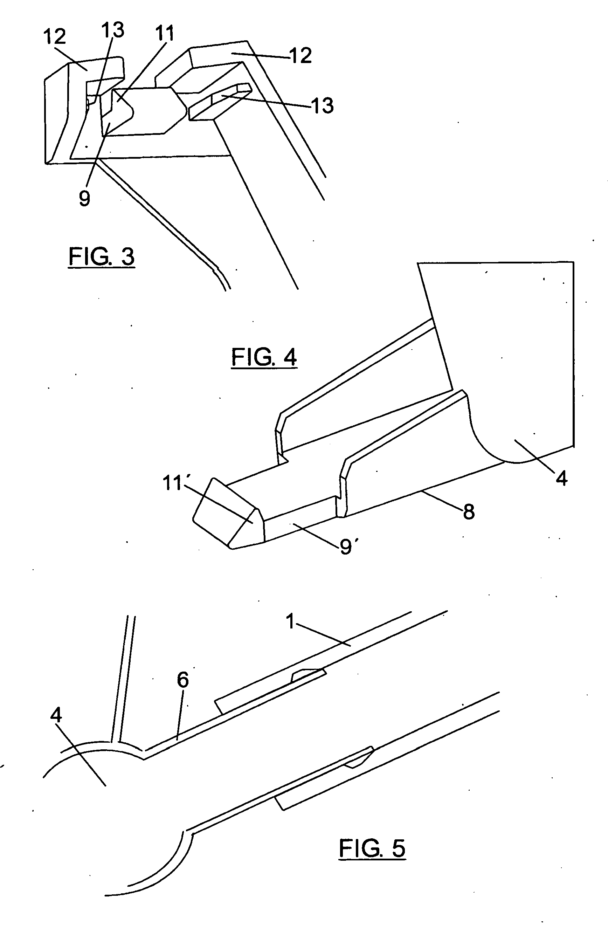

The coupling part 3 consists of a receptacle 4 the open base 5 of which defines the connection mouth for connecting to the glove compartment, as will be set forth below. From this receptacle 4 there projects a nipple 6, Figure 5, for connecting it to the conduit 1. Arms also project from the receptacle 4, two upper arms which are referenced with the number 7 and one lower arm which is referenced with the number 8, which arms are directed towards the casing of the air conditioning equipment and have at their end fixing elements for fixing on anchors formed externally in the casing of the air conditioning equipment, coinciding in position and number.

The fixing elements for fixing the coupling part 3 consist of male pins 9 and 10 formed at the free end of the arms 7 and 8, respectively.

The male pins 9 are shown in detail in Figure 3 and are finished in a transverse broadening 11 with a semi-arrowhead profile. The pins 9 are within a wall or slot 12 with inner partitions 13 which will serve, together with the pin 9 as fixing elements for fixing on anchors of the casing of the air conditioning equipment.

Figure 4 shows a perspective view of the lower arm 8 having, like the upper arms 7, a pin 9' finished in a transverse rib 11' with a semi-arrowhead profile.

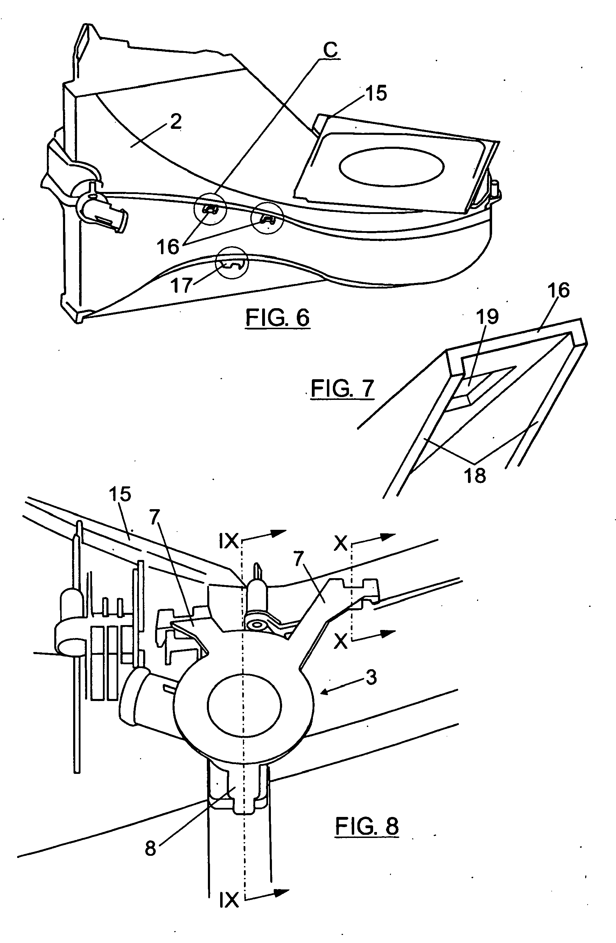

Figure 6 shows the casing 15 of the air conditioning equipment, in which the bayonet coupling 2 forming part of the air feeder shown in Figures 1 and 2 is installed. In this casing 15 anchors 16 and 17 are formed, configured like female pins to receive the coupling and fixing of the male pins 9 and 9' of the arms 7 and 8 of the coupling part 3.

Figure 7 shows in perspective view of one of the female pins 16, which is limited on one side by longitudinal walls 18, between which the male pin 9 of the coupling part will penetrate, and further has a transverse window 19 which will receive the rib 11 of the male pin 9, as will be set forth below.

Figure 8 shows a front perspective view of the air feeder 3 of the invention coupled and fixed on the casing 15 of the air conditioning equipment.

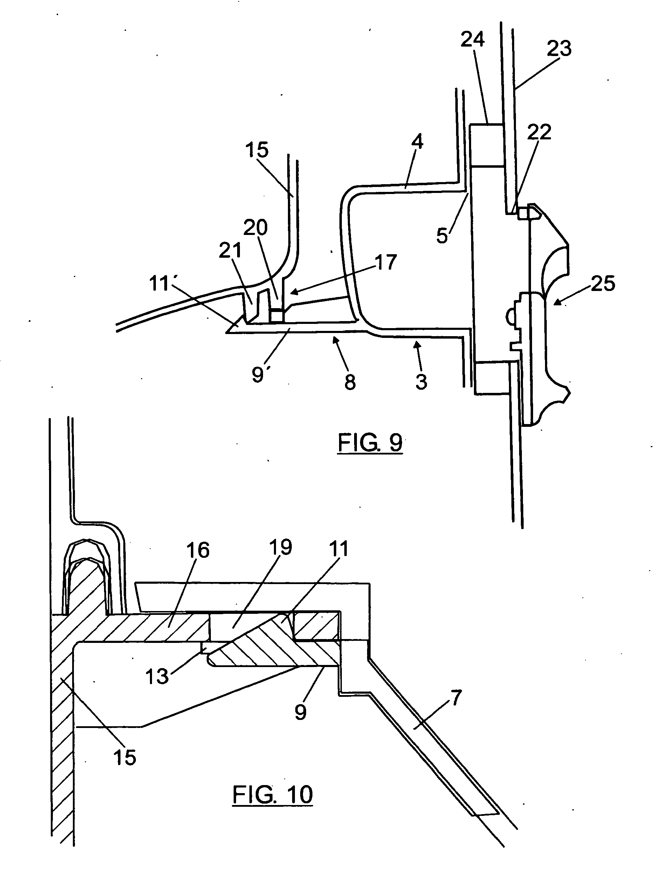

In Figure 9 the coupling of the pin 9' of the lower arm 8 can be coupled on the female pin 17 of the casing 15 of the air conditioning equipment.

In this case the female pin 17 of the casing 15 of the air conditioning equipment is configured like two consecutive flanges 20 and 21, the first of which serves as a guiding means to drive the coupling of the arm 9' of the pin 8, whereas the second serves as an element for retaining the end rib 11' of said arm, a clip-fastening being achieved as a result of the possibility of buckling of the pin 9', so that the rib 11' surpasses the edge of the flange 21.

Figure 9 also shows how the open base 5 of the receptacle 4 is opposite an opening 22 of the wall 23 of the glove compartment, with the interposition of a foam ring 24 serving as a closing or tightness element between the coupling part 3 and the wall of the glove compartment 23, and also to absorb possible clearances between these components. In the opening 22 of the glove compartment 23 there can be assembled a closing and opening gate 25, in the form of a rotating crown.

Figure 10, which is a section according to section line X-X of Figure 8, shows a section view of the coupling of the male pin 9 of the upper arms 7 of the coupling part in the female pin 16 of the casing 15 of the air conditioning equipment. This female pin 16 is within the slot limited by the walls 12, Figure 3, between them and the inner partitions 13, at the same time as the pin 9 penetrates under the female pin 16 until the end rib 11 is housed in the window 19 of said female pin.

With the makeup described the male pins 9 and 9' of the coupling part 3 of the feeder are adjusted and retained in the female pins 16 and 17, Figure 6, of the casing of the air conditioning equipment, such that the entire air feeder is supported by said casing.

The operation for assembling the air feeder of the invention therefore requires the connection of the conduit 1 to the casing of the air conditioning equipment, which is carried out by means of a bayonet coupling 2 with a makeup known in itself, and by means of fixing the coupling part 3 to the same casing 15 of the air conditioning equipment, by means of the pins 9 and 9' of the arms 7 and 8 of the coupling part which are clip-fastened in the female pins 16 and 17 of the casing of the air conditioning equipment, screws or auxiliary anchoring elements therefore not being necessary.

With the air feeder of the invention the assembly of the conduit providing the conditioning air to the glove compartment is simplified and the risks of clearance between said feeder and glove compartment are reduced.

## Claims

1. Conditioning air feeder for glove compartments of automobiles, made up of a conduit (1) which is connected at one end to the air conditioning equipment (15) by means of a bayonet coupling (2), and at the opposite end to the glove compartment 23 of the automobile by means of a coupling part (3) forming a nipple (6) for inserting into the conduit (1) and a connection mouth for connecting with the glove compartment, **characterised in that** the coupling part (3) externally has fixing elements for fixing on anchors formed externally in the casing (15) of the air conditioning equipment, coinciding in position and number, which anchoring and fixing elements have mutual clip-fastening means.

2. The feeder according to claim 1, **characterised in that** the coupling part (3) this made up of a receptacle (4), from which the mentioned nipple (6) starts and the open base 5 of which forms the connection mouth for connecting to the glove compartment (23); and **in that** the mentioned fixing elements consist of arms (7 and 8) projecting externally from the wall of said receptacle 4, they are directed towards the casing >(15) of the air conditioning equipment and have at their ends a male pin (9-9') with a retaining tip which is introduced and fixed in the anchors of said casing.

3. The feeder according to claim 2, **characterised in that** the retaining tip of the male pins (9 and 9') consist of a transverse broadening (11 and 11') with a semi-arrowhead profile and the anchors of the casing of the air conditioning equipment consist of female pins (16 and 17) formed externally in said casing, in which the male pins (9 and 9') are tightly coupled by sliding.

4. The feeder according to claim 3, **characterised in that** the female pins (16) have longitudinal walls (18), which serve to drive the coupling of the male pins (9) and a recess or transverse window (19) in which the retaining tip (11) of said male pins (9) is fitted and fastened.

5. The feeder according to claim 3, **characterised in that** one of the female pins (17) is made up of two parallel-flanges (20 and 21), on the free edge of which the pin (9') of the arm (8) slides and the transverse rib (11') is retained.

## Patentansprüche

1. Zufuhr klimatisierter Luft für ein Handschuhfach eines Fahrzeugs, bestehend aus einer Leitung (1), die an einem Ende mit Hilfe einer Bajonettverbindung (2) mit einer Klimaanlage (15) und am gegenüberliegenden Ende mit Hilfe eines Verbindungsteils (3), das einen Nippel (6) zum Einführen in die Leitung (1) und ein Verbindurigsmundstück zum Verbinden mit dem Handschuhfach bildet, mit dem Handschuhfach (23) des Fahrzeugs verbunden ist, **dadurch gekennzeichnet, dass** das Verbindungsteil (3) externe. Befestigungselemente zum Befestigen an Ankerpunkten aufweist, die extern am Gehäuse (15) der Klimaanlage gebildet sind, wobei sich die Befestigungselemente und Ankerpunkte in Position und Anzahl decken und ineinander einrastende Befestigungsmittel aufweisen.

2. Zufuhr nach Anspruch 1, **dadurch gekennzeichnet, dass** das Verbindungsteil (3) aus einer Steckbuchse (4) besteht, von welcher sich der genannte Nippel (6) erstreckt und dessen offene Basis (5) das Verbindungsmundstück zum Verbinden mit dem Handschuhfach (23) bildet, und **dadurch**, dass die Befestigungselemente aus Armen (7 und 8) bestehen, die von der Wandung der Steckbuchse (4) extern hervorragen, zum Gehäuse (15) der Klimaanlage gerichtet sind und an ihren Enden Steckdorne (9 und 9') mit Halterungsspitzen aufweisen, die in die Ankerpunkte des Gehäuses eingeführt und dort befestigt werden.

3. Zufuhr nach Anspruch 2, **dadurch gekennzeichnet, dass** die Halterungsspitzen der Steckdorne (9 und 9') aus quer verlaufenden Ausweitungen (11 und 11') mit einem Profil in Form eines Halbpfeils bestehen' und die Ankerpunkte des Gehäuses der Klimaanlage aus Aufnahmedornen (16 und 17) bestehen, die extern am Gehäüse gebildet sind und mit welchen die Steckdorne (9 und 9') durch Einschieben fest verbunden werden.

4. Zufuhr nach Anspruch 3, **dadurch gekennzeichnet, dass** die Steckdorne (16) Längswandungen (18) aufweisen, die dazu dienen, die Verbindung der Steckdorne (9) zu verstärken, und eine Vertiefung oder ein quer verlaufendes Fenster (19), in welches die Halterungsspitze (11) des Steckdorns (9) eingeführt und befestigt wird.

5. Zufuhr nach Anspruch 3, **dadurch gekennzeichnet, dass** einer der Aufnahmedorne (17) aus zwei parallelen Auskragungen (20 und 21) besteht, in deren freies. Ende der Steckdorn (9') des Arms (8) gleitet und die Querrippe (11') gehalten wird.

## Revendications

1. Dispositif d'alimentation d'air de conditionnement pour les boîtes à gants d'automobiles, composé d'un conduit (1) qui est raccordé au niveau d'une extrémité à l'équipement de conditionnement d'air (15) au moyen d'un couplage à baïonnette (2), et au niveau de l'extrémité opposée à la boîte à gants (23) de l'automobile au moyen d'une partie de couplage (3) formant un mamelon (6) pour l'insertion dans le conduit (1) et une bouche de raccordement pour le raccordement avec la boîte à gants, **caractérisé en ce que** la partie de couplage (3) a extérieurement des éléments de fixation pour fixer des ancrages formés extérieurement dans le boîtier. (15) de l'équipement de conditionnement d'air, coïncidant du point de vue de la position et du nombre, lesquels éléments d'ancrage et de fixation ont des moyens de fixation par' encliquetage mutuel.

2. Dispositif d'alimentation selon la revendication 1, **caractérisé en ce que** la partie de couplage (3) est composée d'un réceptacle (4), à partir duquel le mamelon (6) mentionné commence et dont la base (5) ouverte forme la bouche de raccordement pour le raccordement à la boîte à gants (23) ; et **en ce que** les éléments de fixation mentionnés se composent de bras (7 et 8) faisant,saillie vers l'extérieur à partir de la paroi dudit réceptacle (4), ils, sont dirigés vers le boîtier (15) de l'équipement de conditionnement d'air et ont au niveau de leurs extrémités, une broche mâle (9 - 9') avec une pointe de retenue qui est introduite et fixée dans les ancrages dudit boîtier.

3. Dispositif d'alimentation selon la revendication 2, **caractérisé en ce que** la pointe de retenue des broches mâles (9 et 9') se compose d'un élargissement transversal (11 et 11') avec un profil de demi-tête de flèche et les ancrages du boîtier de l'équipement de conditionnement d'air se composent de broches femelles (16 et 17) formées extérieurement dans ledit, boîtier, dans lequel les broches mâles (9 et 9') sont couplées de manière étanche par coulissement.

4. Dispositif d'alimentation selon la revendication 3, **caractérisé en ce que** les broches femelles (16) ont des parois longitudinales (18) qui servent à entraîner le couplage des broches mâles (9) et un évidement ou fenêtre transversale (19) dans lequel la pointe de retenue (11) desdites broches mâles (9) est installée et fixée.

5. Dispositif d'alimentation selon la revendication 3, **caractérisé en ce que** l'une des broches femelles (17) est composée de deux rebords parallèles (20 et 21) sur le bord libre desquels la broche (9') du bras (8) coulisse et la nervure transversale (11') est retenue.
